# EUROPEAN PATENT SPECIFICATION

(11) **EP 1 874 027 B1**
(45) Date of publication and mention of the grant of the patent: **09.10.2013**
(21) Application number: 07110830.2
(22) Date of filing: 22.06.2007
(51) Int. Cl.: H04N 1/00, H04N 1/44

(54) **Image forming device**
Bilderzeugungsvorrichtung
Dispositif de formation d'images

(30) Priority: 29.06.2006 JP 2006179981
(43) Date of publication of application: 02.01.2008
(73) Proprietor: Ricoh Company, Ltd., Tokyo 143-8555 (JP)
(72) Inventor: Aono, Yoshiko, Yokohama-shi, Kanagawa (JP)
(74) Representative: Schwabe - Sandmair - Marx

(56) References cited:
- EP-A- 1 553 525
- EP-A- 1 574 930
- EP-A- 1 599 029
- JP-A- 2003 150 971
- JP-A- 2004 072 131
- US-A1- 2006 101 343

## Description

### BACKGROUND OF THE INVENTION

### 1. Field of the Invention

The present invention relates to an image forming device that allows users to customize an operation screen constituted by a user interface (UI) in any manner desired by the users.

### 2. Description of the Related Art

MFPs (Multi-Function Peripherals) or other image forming devices have more and more high-level functions; as a result, operations of the MFP become complicated, and from the point of view of improving operational efficiency, it is desirable that the operation screen of the MFP be able to be customized in any manner desired by a user.

In the related art, the MFP allows an operator of the MFP to customize the operation screen, and in such a MFP, settings of customization of the operation screen are stored in a memory of an operational panel of the MFP.

In addition, in the related art, the MFP allows all functions available in the MFP to be customized; specifically, the operator of the MFP selects desired functions from a full function list for customization.

Further, in the MFP of the related art, results of customization of the operation screen are displayed on the operation screen after the MFP returns to the usual operational condition.

For example, Japanese Laid Open Patent Application No. 2002-7011 discloses a user interface technique which is able to greatly reduce operating workload of a user even when various types of devices exist.

However, although the MFP of the related art allows customization of the operation screen, it suffers from the following problems.
(1) In the MFP of the related art, users are not allowed to customize the operation screen. Because the MFP has more and more high-level functions and operations of the MFP become more and more complicated, it is desirable that users be allowed to customize the operation screen of the MFP in any manner desired by the users.
(2) In the MFP of the related art, since settings of the operation screen are stored in the memory of the operational panel of the MFP, due to the limited capacity of the memory, many setting patterns cannot be stored. Usually, only the operator of the MFP can register a small number of patterns, so that a large number of common users cannot create operation screens of their own.
   In recent years, usually, the MFP possesses personal authentication functions when the users are to operate the MFP, and this allows the MFP to determine the user who is to operate the MFP. However, due to the limited capacity of the memory, users cannot customize the operation screen as desired, and cannot store settings of the customization.
(3) In the MFP of the related art, since all functions available in the MFP are allowed to be customized, if the operation screen is customized by common users, when the operation screen is actually used, sometimes, the customized functions cannot be used.
(4) In the MFP of the related art, since the results of operation screen customization are displayed on the operation screen after the MFP returns to the usual operational condition, the user cannot confirm the results of operation screen customization until the MFP returns to the usual operational condition; this is not convenient to the user, and sometimes, the user may forget which operation screen is being customized.
(5) In the MFP of the related art, since the user cannot grasp how the customized settings will be displayed on the operation screen in real-time, often, the user has to perform customization from beginning once again.

The above mentioned reference (Japanese Laid Open Patent Application No. 2002-7011) discloses a technique using a portable user interface unit; it cannot be directly applied to customization of the operation screen of a MFP, and thus cannot solve the above problems.

US-2006/101343 A relates to an image forming apparatus, display screen customization method in image forming apparatus and display screen customization program. A customization information processing section generates and displays a customization setting screen corresponding to a menu screen, with reference to screen design information and customization information read from respective storage sections, and then registers information regarding a button, such as a size, position, and character string input and set by a user, with the customization information storage section. When a screen display control section displays a menu screen, it generates and displays a customized menu screen based on the screen design information and the customization information read from the respective storage sections. In this manner, a standard screen provided for an image forming apparatus is customized.

### SUMMARY OF THE INVENTION

The invention is defined by the subject-matter of the independent claims. The dependent claims are directed to advantageous embodiments.

### ADVANTAGES OF THE INVENTION

Advantageously, it is provided an image forming device allowing plural users to efficiently customize an operation screen as desired by the users.

Advantageously, there is provided an image forming device, comprising:
an operational unit that has a display unit for displaying an operation screen for operating the image forming device;
a setting data storage unit that stores a plurality of operation screen setting data sets corresponding to a plurality of users; and
a screen generation unit that, in response to a request for setting the operation screen from a user, acquires one of the operation screen setting data sets corresponding to said user from the setting data storage unit, generates a setting screen, displays the setting screen on the display unit for performing operation screen setting, and stores results of the operation screen setting in the setting data storage unit.

Advantageously, the setting data storage unit is provided in a common storage device separate from the operational unit. Preferably, the setting data storage unit is provided in a main body of the image forming device. Alternatively, the setting data storage unit is provided in a server device located on a network.

Advantageously, the image forming device further comprises:
a user authentication determination unit that, before storing the operation screen setting results obtained by the screen generation unit in the setting data storage unit, determines whether the operation screen setting results are within an allowed range specified for said user,
   wherein
the operation screen setting results are stored in the setting data storage unit when the operation screen setting results are within the allowed range of said user.

Advantageously, the image forming device further comprises:
a function storage unit that stores a summary of functions available in the image forming device,
   wherein
the screen generation unit acquires functions available to said user from the function storage unit before generating the setting screen, and generates the setting screen based on the acquired functions available to said user.

Advantageously, the display unit displays a setting screen together with the operation screen.

Advantageously, the display unit displays the setting screen together with the operation screen, and
the screen generation unit updates the setting screen in real-time to maintain the setting screen to be the same as the operation screen.

Advantageously, the display unit displays a summary of the operation screens corresponding to respective users registered in the setting data storage unit,
the screen generation unit displays one operation screen, selected by one of the registered users, on the display unit, and
in response to a request from the one of the registered users, the screen generation unit stores a setting data set of the displayed operation screen in the setting data storage unit as a setting data set corresponding to said one of the registered users.

Advantageously, there is provided a method of customizing a user interface of an image forming device including an operational unit, said operational unit having a display unit for displaying an operation screen for operating the image forming device, said method comprising :
a screen generation step of, in response to a request from a user for setting the operation screen, acquiring an operation screen setting data set corresponding to said user from a setting data storage unit, and generating a setting screen, said setting data storage unit storing a plurality of operation screen setting data sets corresponding to a plurality of users;
a step of displaying the setting screen on the display unit for performing operation screen setting; and
a step of storing results of the operation screen setting in the setting data storage unit.

Advantageously, the setting data storage unit is provided in a main body of the image forming device, or in a server device located on a network.

Since the screen generation unit performs operation screen customization, and setting data of the operation screen are stored in the setting data storage unit, it is possible to provide an image forming device allowing many users to efficiently customize the operation screen as desired by them.

These and other features and advantages of the present invention will become more apparent from the following detailed description of preferred embodiments given with reference to the accompanying drawings.

### BRIEF DESCRIPTION OF THE DRAWINGS

FIG. 1 is a block diagram illustrating a configuration of a Multi-Function Peripheral (MFP) according to an embodiment of the present invention;
FIG. 2 is a schematic view illustrating an example of the operational unit 2;
FIG. 3 is a diagram illustrating examples of the setting data storage unit 7, the user authentication determination unit 8, and the function storage unit 9, respectively;
FIG. 4 is a sequence diagram illustrating operations from user authentication to displaying operation screens for each user;
FIG. 5A and FIG. 5B are schematic views illustrating examples of operation screens of different users;
FIG. 6 is a sequence diagram illustrating operations of customizing an operation screen. Here, editing a scanning screen is taken as an example;
FIG. 7 is a schematic view illustrating an example of an initial setting screen;
FIG. 8 is a schematic view illustrating an example of a screen for UI screen setting;
FIG. 9 is a schematic view illustrating an example of the setting screen for setting a UI screen;
FIG. 10 is a schematic view illustrating an example of the operation screen;
FIG. 11 is a schematic view illustrating an example of displaying a setting screen on the operation screen;
FIG. 12 is a sequence diagram illustrating operations of reflecting changes to the setting screen to the operation screen in real-time;
FIG. 13 is a sequence diagram illustrating additional function identification operations before displaying an operation screen
FIG. 14 is a sequence diagram illustrating operations of re-using an operation screen of another user;
FIG. 15 is a schematic view illustrating an example of a screen for screen take-in; and
FIG. 16 is a schematic view illustrating an example of the setting take-in previewing screen.

### DESCRIPTION OF THE PREFERRED EMBODIMENTS

Below, preferred embodiments of the present invention are explained with reference to the accompanying drawings.

### <System Configuration>

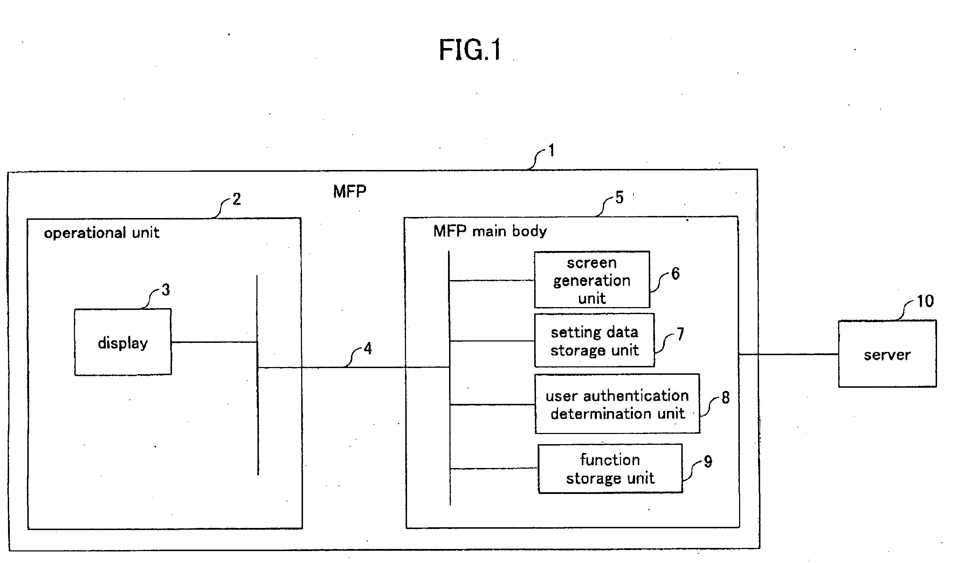

FIG. 1 is a block diagram illustrating a configuration of a Multi-Function Peripheral (MFP) according to an embodiment of the present invention.

As shown in FIG. 1, a MFP 1 of the present embodiment includes an operational unit 2 having a display unit 3, and a main body 5, which has a screen generation unit 6, a setting data storage unit 7, a user authentication determination unit 8, and a function storage unit 9. The operational unit 2 is connected to the main body 5 via a bus 4.

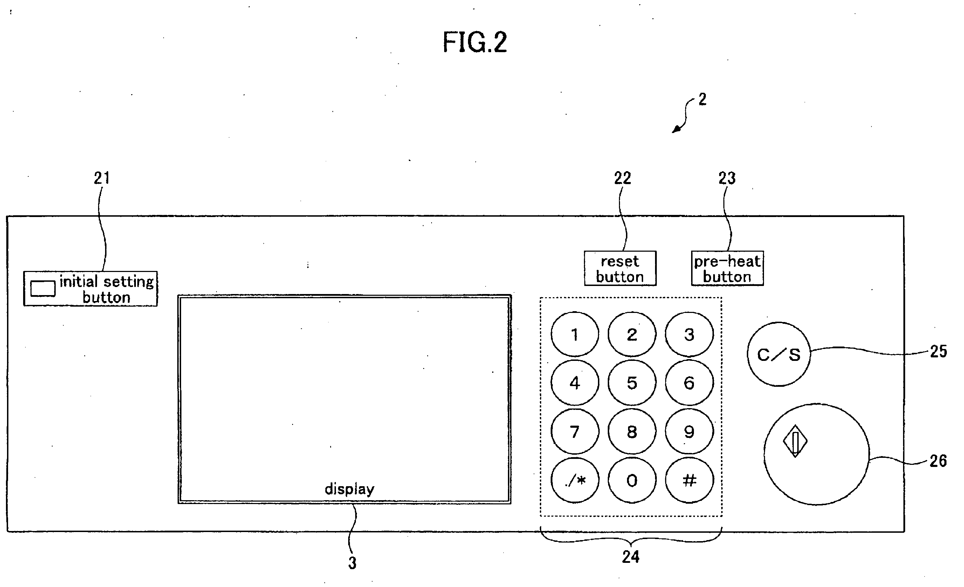

FIG. 2 is a schematic view illustrating an example of the operational unit 2.

As shown in FIG. 2, in addition to the display unit 3, which displays screens for operating and setting the MFP 1, and for example, includes a liquid crystal panel having a touch panel on the surface, the operational unit 2 further includes an initial setting button 21, a reset button 22, a preheat button 23, a key pad 24, a clear/stop button 25, and a start button 26.

Returning to FIG. 1, the screen generation unit 6 has icon data and graphic data, and is able to generate graphic window images on the display 3 acting as an operation screen for usual operations, or a setting screen for customizing the operation screen. Additionally, the screen generation unit 6 is able to control storage of setting data.

The setting data storage unit 7, for example, is a part of a general hard disk drive (HDD) of the main body 5 of the MFP 1; further, for example, the hard disk drive is a device separate from the operational unit 2, and retains setting information of the operation screens of respective users. Note that the setting data storage unit 7, or a part of the setting data storage unit 7 may be provided in a server 10 on a network.

The user authentication determination unit 8 stores user information, and determines whether customization results of the operation screen are within the range allowed for the user who performs the setting.

The function storage unit 9 retains a list of functions available in the MFP 1.

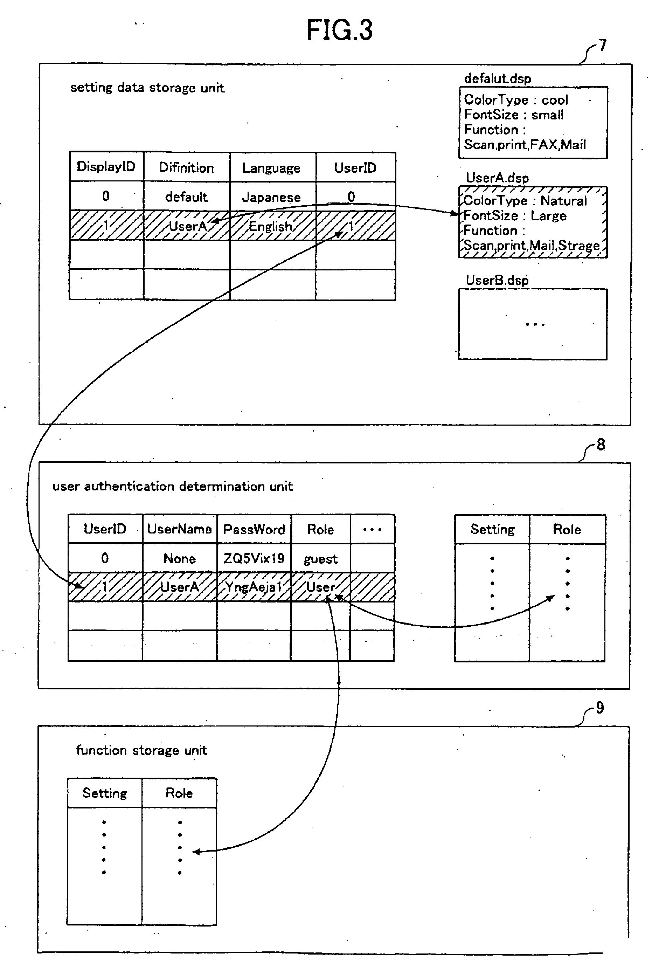

FIG. 3 is a diagram illustrating examples of the setting data storage unit 7, the user authentication determination unit 8, and the function storage unit 9, respectively.

As shown in FIG. 3, the setting data storage unit 7 holds a table including items of "Display ID", "Definition", "Language", and "User ID" with these items being related to each other, and system files of respective users, which are associated with the "Definition" item.

The user authentication determination unit 8 holds a table including items of "User ID", "UserName", "PassWord", "Role", and others, and a table including items of "Setting" and "Role" related to each other. For example, when determining whether a setting value is in a range allowed for a user, the user authentication determination unit 8 determines whether the value of the item "Role" corresponding to the given value of "Setting" is within the range of the item "Role" included in the user information.

The function storage unit 9 holds a table including items of "Function" and "Role" related to each other. For example, when determining whether a function is available to a user, the function storage unit 9 determines whether the value of the item "Role" corresponding to the given "function" is within the range of the item "Role" included in the user information.

### <Operations>

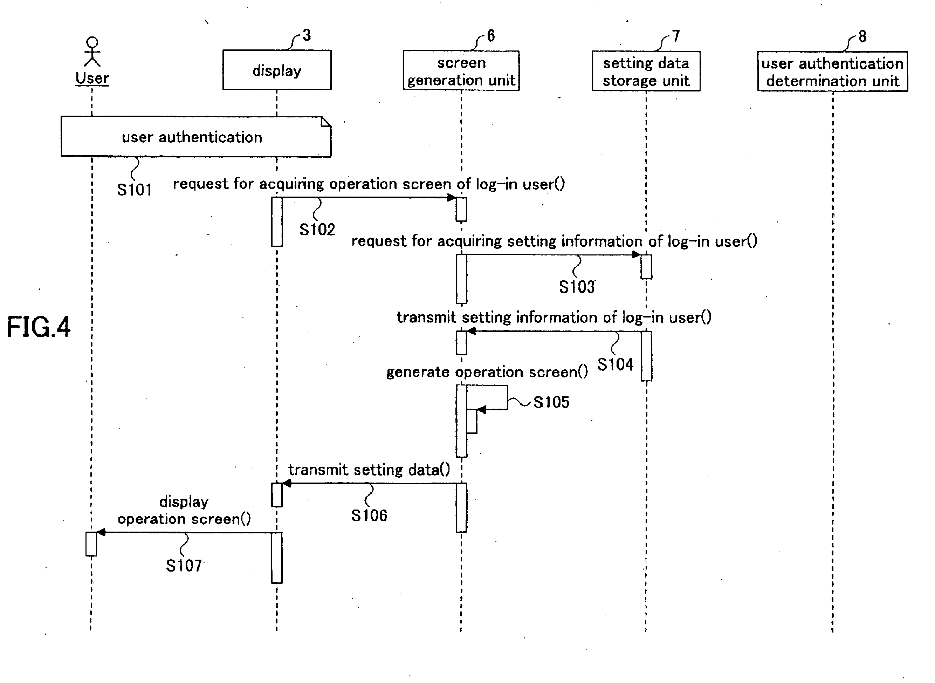

FIG. 4 is a sequence diagram illustrating operations from user authentication to displaying operation screens for each user.

As shown in FIG. 4, in step S101, a user operates the display unit 3 to perform user authentication. Consequently, the log-in user (current user) is determined.

In step S102, the display unit 3 requests the screen generation unit 6 to acquire an operation screen corresponding to the log-in user.

In step S103, the screen generation unit 6 requests the setting data storage unit 7 to acquire setting information of the log-in user.

In step S104, the setting data storage unit 7 transmits the setting information to the screen generation unit 6.

In step S105, the screen generation unit 6 generates an operation screen based on the obtained setting information.

In step S106, the screen generation unit 6 sends the generated screen data to the display unit 3.

In step S107, the display unit 3 displays the operation screen to the user based on the screen data from the screen generation unit 6.

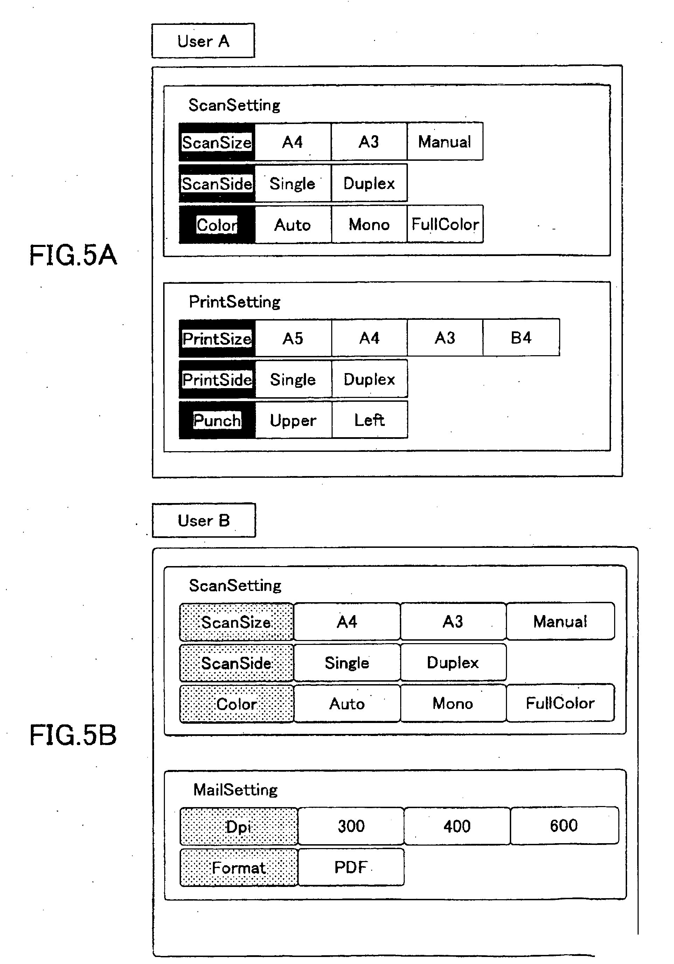

FIG. 5A and FIG. 5B are schematic views illustrating examples of operation screens of different users.

Shown in FIG. 5A is a screen (a graphic window) for a user A to log in, and shown in FIG. 5B is a screen for a user B to log in.

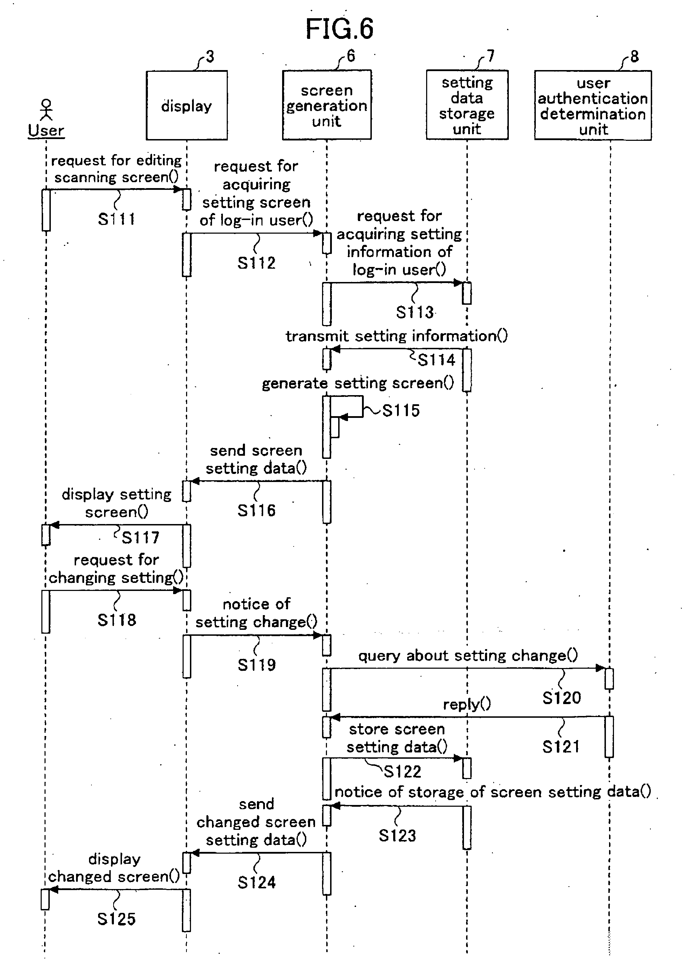

FIG. 6 is a sequence diagram illustrating operations of customizing an operation screen. Here, editing a scanning screen is taken as an example.

As shown in FIG. 6, in step S111, after the user authentication is completed, the user requests the display unit 3 to edit the scanning screen.

For example, the user clicks the initial setting button 21 of the operational unit 2 as shown in FIG. 2, and a screen for initial setting is displayed.

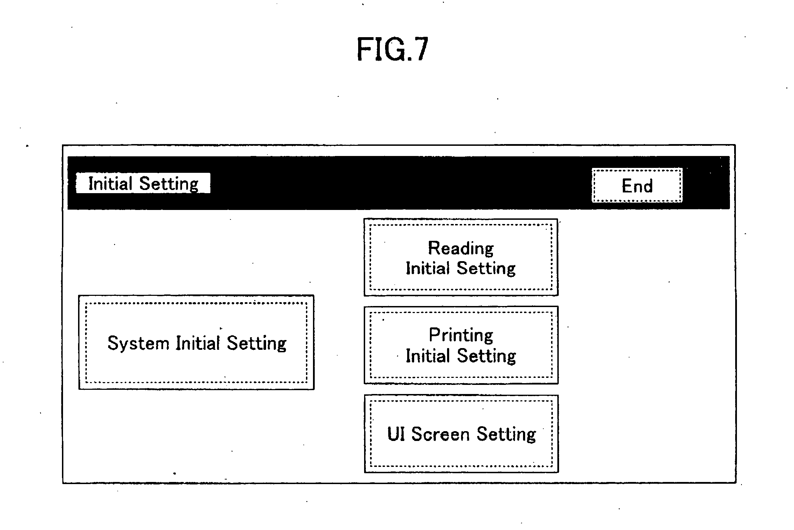

FIG. 7 is a schematic view illustrating an example of an initial setting screen.

As shown in FIG. 7, a system initial setting button, a scan initial setting button, a printing initial setting button, and a UI screen setting button are displayed in the initial setting screen. For example, the above buttons are realized by software (soft button).

In the initial setting screen, for example, the user clicks the UI screen setting button, then, a screen for setting a UI screen is displayed.

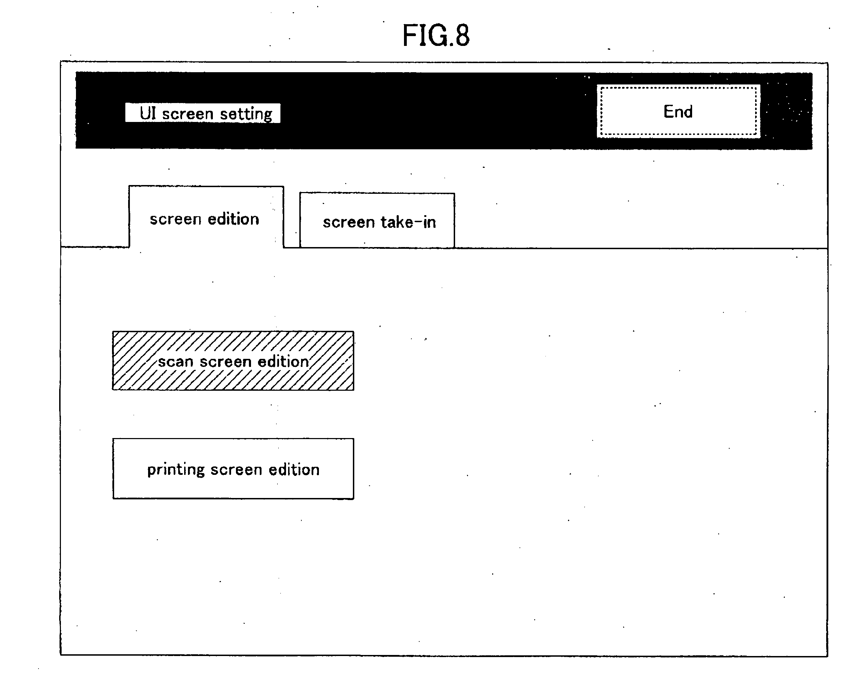

FIG. 8 is a schematic view illustrating an example of a screen for UI screen setting.

In the screen for UI screen setting as shown in FIG. 8, there are displayed a screen edition tab, and a screen take-in tab, for example, which are also soft buttons; when the screen edition tab is clicked, a scan screen edition button and a printing screen edition button, which are soft buttons, are displayed.

In the UI screen setting screen, for example, the user clicks the scan screen edition button, thus, the request for editing a scan screen can be made.

Returning to FIG. 6, in step S112, the display unit 3 requests the screen generation unit 6 to acquire a setting screen for customization by the log-in user.

In step S113, the screen generation unit 6 requests the setting data storage unit 7 to acquire setting information of the log-in user.

In step S114, the setting data storage unit 7 transmits the setting information to the screen generation unit 6.

In step S115, the screen generation unit 6 generates a setting screen based on the obtained setting information.

In step S116, the screen generation unit 6 sends the generated screen data to the display unit 3.

In step S117, the display unit 3 displays the setting screen to the user based on the screen data from the screen generation unit 6.

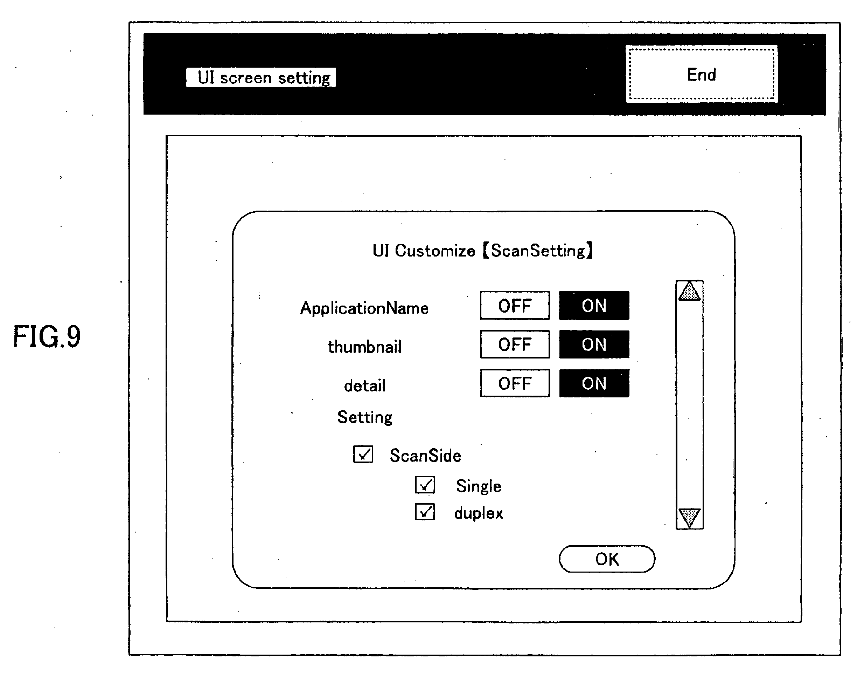

FIG. 9 is a schematic view illustrating an example of the setting screen for setting a UI screen.

As shown in FIG. 9, under a title of "UI Customize (Scan Setting)", plural buttons are provided for switching on or switching off the display of an item "Application Name", an item "thumbnail", an item "detail", and for selection of an item of "Scan Side". In addition to the "UI Customize (Scan Setting)" item, by scrolling a scroll bar on the right side of the window, other items can be displayed and the user can perform settings appropriately for the other items. After the setting is finished, an "OK" button is clicked to finish the procedure.

Returning to FIG. 6, in step S118, the user makes settings on the setting screen, and when the user desires to change the settings, for example, the user clicks an "OK" button as shown in FIG. 9.

In step S119, the display unit 3 informs the screen generation unit 6 that the user desires to make changes.

In step S120, the screen generation unit 6 queries the user authentication determination unit 8 whether the change of the setting is allowed.

In step S121, the user authentication determination unit 8 sends a reply to the screen generation unit 6.

For example, the user authentication determination unit 8 allows all of the changes if all of the changes are valid, or the user authentication determination unit 8 does not allow all or part of the changes if all or the part of the changes are not valid.

In step S122, the screen generation unit 6 requests the setting data storage unit 7 to store the changed screen settings.

In step S123, the setting data storage unit 7 sends the screen generation unit 6 a notice indicating storage of the changed screen settings.

In step S124, the screen generation unit 6 sends the changed screen setting data to the display unit 3.

In step S125, the display unit 3 displays the changed screen setting to the user.

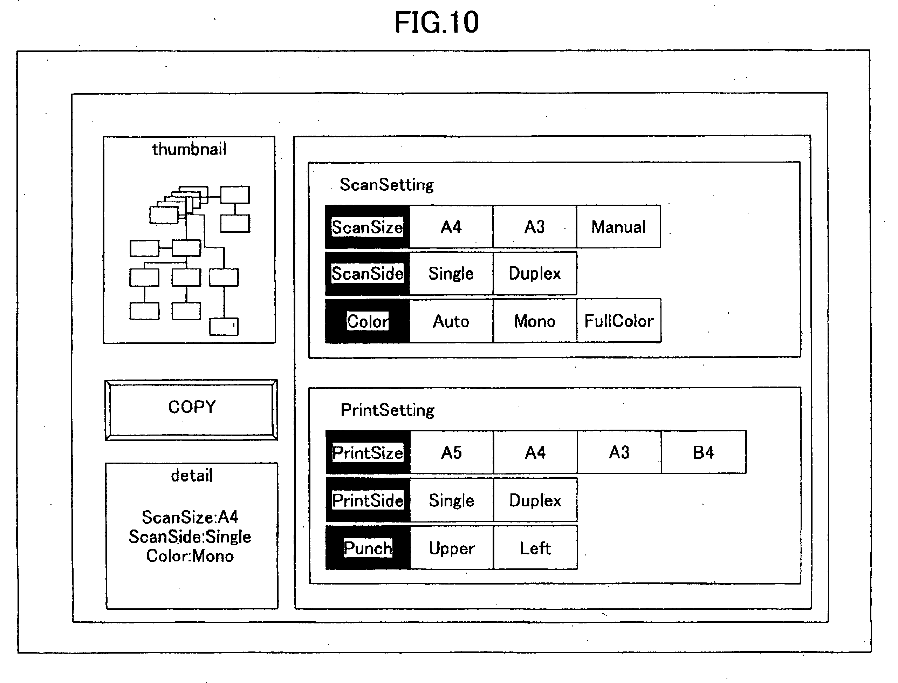

FIG. 10 is a schematic view illustrating an example of the operation screen.

Specifically, shown in FIG. 10 is an operation screen after the procedure of changing a setting is finished, and the input setting values are reflected in the operation screen.

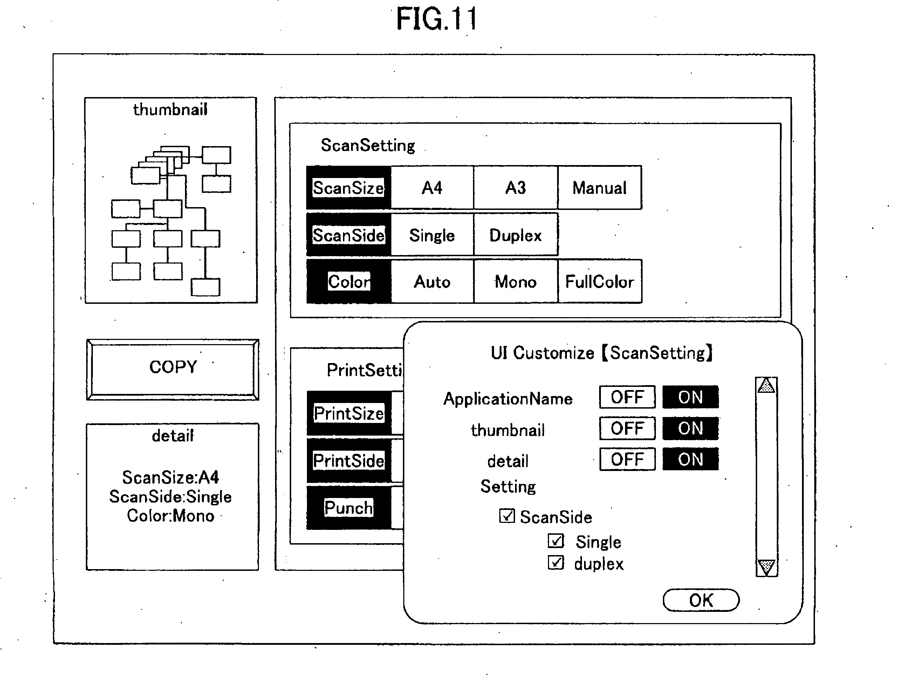

FIG. 11 is a schematic view illustrating an example of displaying a setting screen on the operation screen.

Referring back to FIG. 9, only one setting screen is displayed. Due to this, the user cannot confirm the setting results until the setting operations are finished; this is quite inconvenient to the user, and sometimes, the user may forget for which operation screen the setting is being made.

To resolve this problem, in the present embodiment, as shown in FIG. 11, a setting screen is displayed to be superposed on an operation screen, on which operation screen settings are being undertaken. Due to this, the user can constantly view the operation screen, and the user can confirm the operation screen each time a setting is made.

Certainly, when the displaying area of the display unit 3 is large, the setting screen and the operation screen can be displayed on the display unit 3 side by side.

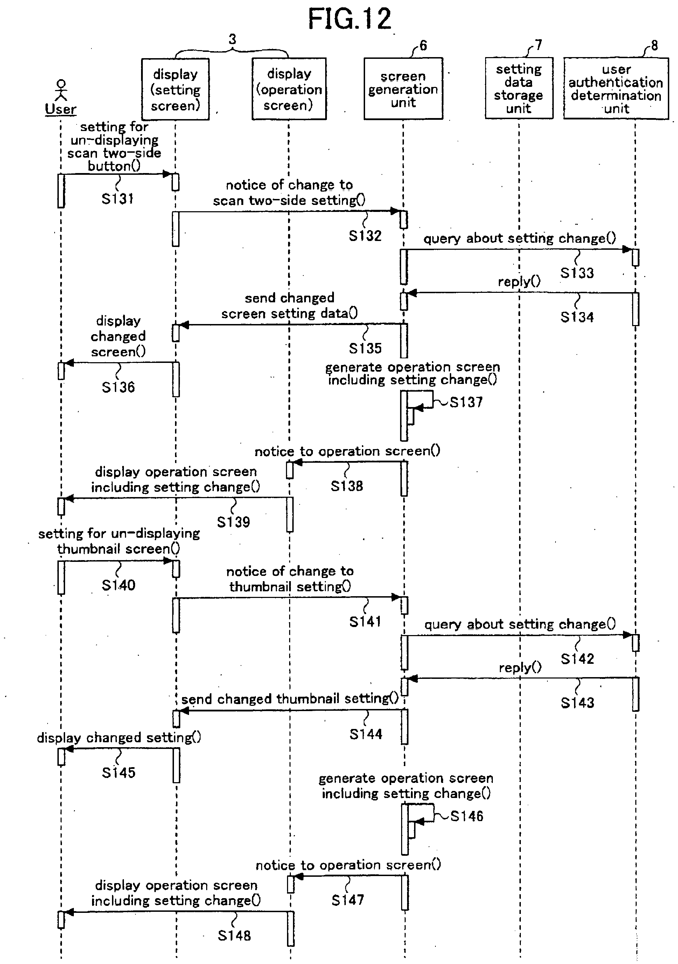

FIG. 12 is a sequence diagram illustrating operations of reflecting changes to the setting screen to the operation screen in real-time.

In this example, In addition to displaying the setting screen together with the operation screen, as shown in FIG. 11, the operation screen is updated in real-time once any change is made on the setting screen. This improves operability.

As shown in FIG. 12, in step S131, assume the setting screen and the operation screen are both displayed on the display unit 3. For example, the user is setting not to display the scan two-side button.

In step S132, the display unit 3 informs the screen generation unit 6 of the change to the scan two-side setting.

In step S133, the screen generation unit 6 queries the user authentication determination unit 8 whether the change of the setting is allowed.

In step S134, the user authentication determination unit 8 sends a reply to the screen generation unit 6.

In step S135, the screen generation unit 6 sends the changed screen setting data to the setting screen of the display unit 3.

In step S136, the display unit 3 displays the changed screen setting, which is obtained from the setting screen of the display unit 3, to the user.

In step S137, in parallel to step 135 and step 136, the screen generation unit 6 generates an operation screen including the changed settings.

In step S138, the screen generation unit 6 informs the operation screen of the display unit 3.

In step S139, the display unit 3 displays the operation screen including the changed setting to the user.

In step S140, for example, the user is setting not to display a thumbnail screen.

In step S141, the display unit 3 informs the screen generation unit 6 of the change to the thumbnail screen.

In step S142, the screen generation unit 6 queries the user authentication determination unit 8 whether the change of the setting is allowed.

In step S143, the user authentication determination unit 8 sends a reply to the screen generation unit 6.

In step S144, the screen generation unit 6 sends the changed setting of the thumbnail screen to the setting screen of the display unit 3.

In step S145, the display unit 3 displays the changed screen setting, which is obtained from the setting screen of the display unit 3, to the user.

In step S146, in parallel to step 144 and step 145, the screen generation unit 6 generates an operation screen including the changed settings.

In step S147, the screen generation unit 6 informs the operation screen of the display unit 3.

In step S148, the display unit 3 displays the operation screen including the changed setting to the user.

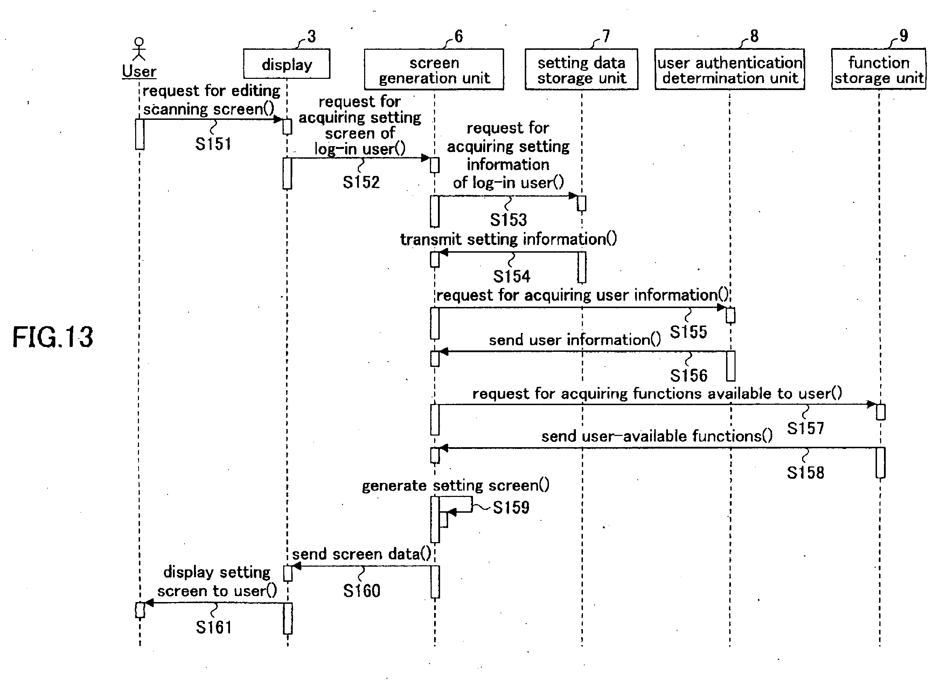

FIG. 13 is a sequence diagram illustrating additional function identification operations before displaying an operation screen.

Because the function identification operations are performed prior to displaying an operation screen, a user cannot customize functions not available to the user. This prevents useless setting of unavailable functions.

As shown in FIG. 13, in step S151, after the user authentication is completed, the user requests the display unit 3 to edit the scanning screen.

In step S152, the display unit 3 requests the screen generation unit 6 to acquire a setting screen for customization by the log-in user.

In step S153, the screen generation unit 6 requests the setting data storage unit 7 to acquire setting information of the log-in user.

In step S154, the setting data storage unit 7 transmits the setting information to the screen generation unit 6.

In step S155, the screen generation unit 6 requests the user authentication determination unit 8 to acquire user information of the log-in user.

In step S156, the user authentication determination unit 8 sends the user information of the log-in user to the screen generation unit 6.

In step S157, the screen generation unit 6 requests the function storage unit 9 to acquire a summary of the functions available to the user.

In step S158, the function storage unit 9 sends the summary of the functions available to the user to the screen generation unit 6.

In step S159, the screen generation unit 6 generates a setting screen based on the obtained setting information and the summary of the functions available to the user.

In step S160, the screen generation unit 6 sends the generated screen data to the display unit 3.

In step S161, the display unit 3 displays the setting screen to the user based on the screen data from the screen generation unit 6.

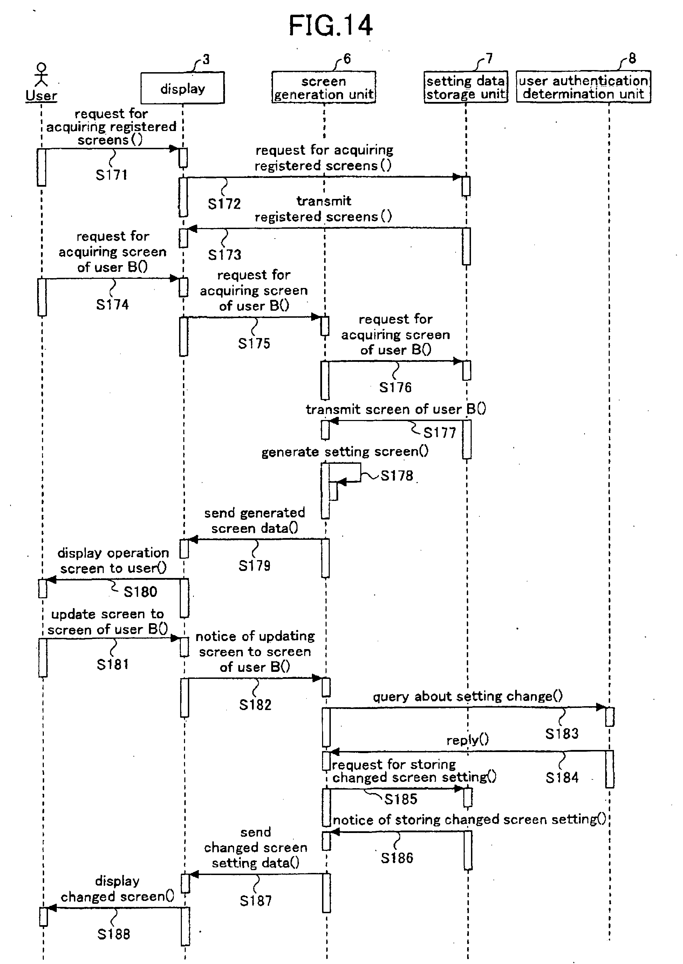

FIG. 14 is a sequence diagram illustrating operations of re-using an operation screen of another user.

As shown in FIG. 14, in step S171, after the user authentication is completed, the user requests the display unit 3 to acquire a list of registered screens.

For example, the user clicks the initial setting button 21 of the operational unit 2 as shown in FIG. 2, and the initial setting screen as shown in FIG. 7 is displayed. In the initial setting screen, the user clicks the UI screen setting button, and the UI screen setting screen as shown in FIG. 8 is displayed. In the UI screen setting screen, for example, the user clicks the screen take-in tab, and the request for acquiring a list of registered screens can be made.

In step S172, the display unit 3 requests the setting data storage unit 7 to acquire the list of registered screens.

In step S173, the setting data storage unit 7 transmits the list of registered screens to the display unit 3. Under this condition, the list of the registered user screens is displayed with each user screen of a reduced size.

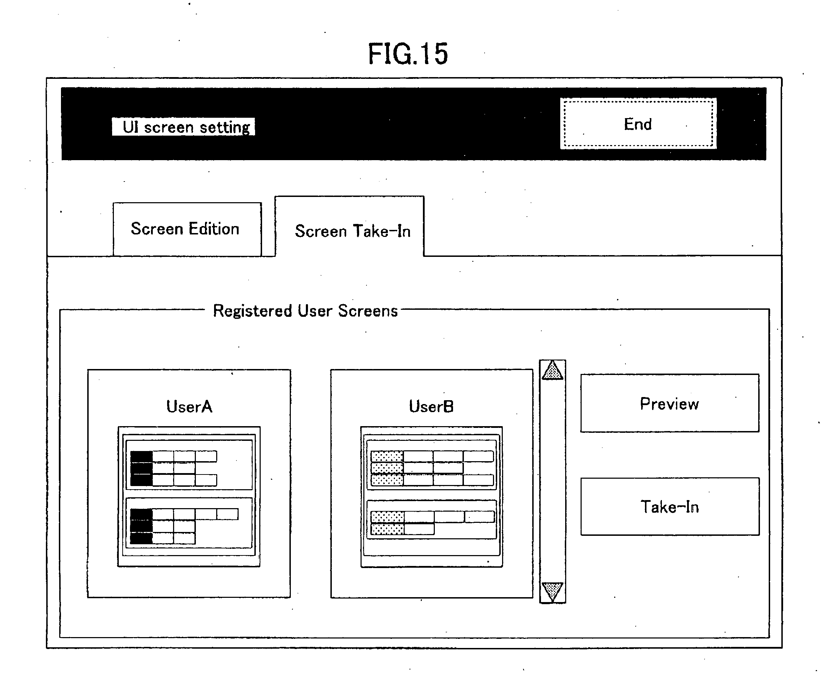

FIG. 15 is a schematic view illustrating an example of a screen for screen take-in.

The registered user screens of the user A and the user B are displayed on the UI screen setting screen with reduced sizes.

Returning to FIG. 14, in step S174, the user requests the display unit 3 to acquire a screen of another user B. For example, the user selects the small user screen of the user B in FIG. 15, and clicks a preview button.

In step S175, the display unit 3 requests the screen generation unit 6 to acquire the screen of user B.

In step S176, the screen generation unit 6 requests the setting data storage unit 7 to acquire the screen of user B.

In step S177, the setting data storage unit 7 transmits the screen of user B to the screen generation unit 6.

In step S178, the screen generation unit 6 generates a setting screen based on the obtained setting information.

In step S179, the screen generation unit 6 sends the generated screen data to the display unit 3.

In step S180, the display unit 3 displays the operation screen to the user.

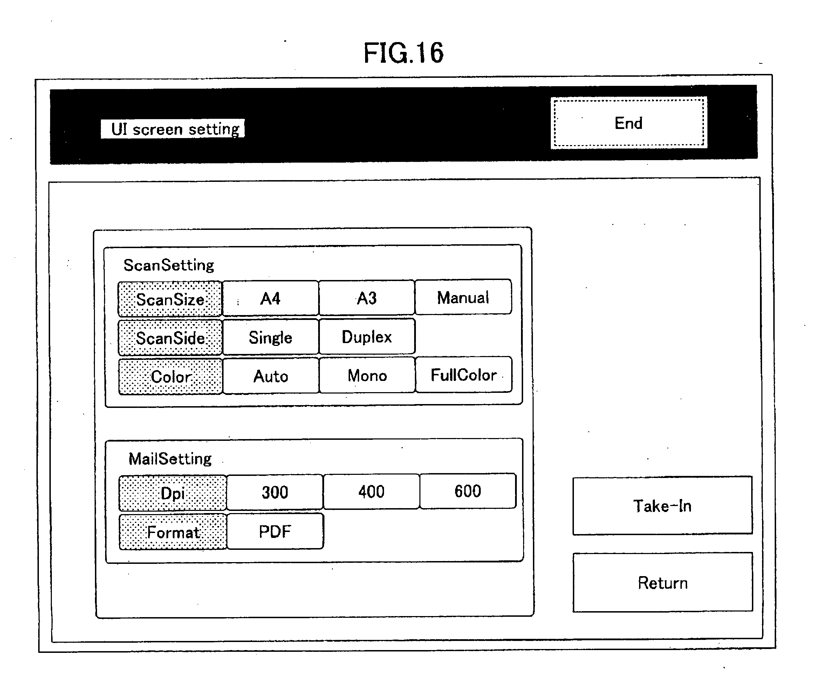

FIG. 16 is a schematic view illustrating an example of the setting take-in previewing screen.

As shown in FIG. 16, the selected operation screen of the user B is displayed as a sample.

Returning to FIG. 14, in step S181, the user instructs the display unit 3 to update the screen of the user to the screen of user B. For example, the user clicks a take-in button in FIG. 15 or FIG. 16.

In step S182, the display unit 3 requests the screen generation unit 6 to update the screen of the user to the screen of user B.

In step S183, the screen generation unit 6 queries the user authentication determination unit 8 whether the change of the setting is allowed.

In step S184, the user authentication determination unit 8 sends a reply to the screen generation unit 6.

In step S185, the screen generation unit 6 requests the setting data storage unit 7 to store the changed screen settings.

In step S186, the setting data storage unit 7 sends the screen generation unit 6 a notice indicating storage of the changed screen settings.

In step S187, the screen generation unit 6 sends the changed screen setting data to the display unit 3.

In step S188, the display unit 3 displays the changed screen setting to the user.

Summarizing the present embodiment, according to the present embodiment,
(1) Due to the setting screen for setting the operation screen, authorized users are allowed to change settings of the operation screen, and the users are able to customize the operation screen of the MFP in any authorized manner desired by the users; hence, the MFP of the present embodiment is more convenient to users.
(2) Since settings of the operation screen made through the setting screen are stored in the main body of the image forming device or in the server, the problem of limited memory capacity does not occur, and many users can create and store operation screens of their own.
(3) Since settings of the operation screen made through the setting screen are stored in the main body of the image forming device or in the server, one user can make use of screen settings made by other users; hence, it is not necessary for one user to make all kinds of settings by himself, but he can use a copy of settings of an operation screen of another user, and this makes screen customization easy.
(4) On the setting screen, since the range of functions is determined, including which functions are available to individual users, it is not necessary to perform useless settings of unavailable functions, but the user can set a desired screen.
(5) Since the setting screen is displayed together with the operation screen, it becomes easy for the user to confirm portions being set, and the user can confirm the setting values without moving the displayed windows (screens), thus reducing the time for operations.
(6) Since the setting screen is displayed together with the operation screen, and the setting results are included in real-time, the user can confirm in real-time whether the desired settings are made and the desired presentations are obtained, thus the user can confirm the settings without moving the displayed windows (screens), and this reduces the time of operations.

The invention is defined by the following claims.

## Claims

1. A multifunctional peripheral device (1), comprising:
an operational unit (2) having a display unit (3) configured to display an operation screen for operating the multifunctional peripheral device (1);
a setting data storage unit (7) configured to store a plurality of operation screen setting data sets wherein each operation screen setting data set corresponds to one of a plurality of users of the multifunctional peripheral device; and
a screen generation unit (6) configured to acquire, in response to a request for setting the operation screen from a user, one of the operation screen setting data sets corresponding to said user from the setting data storage unit (7), generate a setting screen, display the setting screen on the display unit (3) for performing operation screen setting, and store results of the operation screen setting in the setting data storage unit (7);
**characterized in that**:
the display unit (3) is configured to display a list of the operation screens corresponding to respective users registered in the setting data storage unit (7);
the screen generation unit (6) is configured to display an operation screen, selected by the user from the list, on the display unit (3); and
the screen generation unit (6) is further configured to store, in response to a request from the user, a setting data set of the operation screen selected by the user in the setting data storage unit (7) as a setting data set corresponding to said user.

2. The multifunctional peripheral device (1) as claimed in claim 1, wherein the setting data storage unit (7) is provided in a common storage device separate from the operational unit (2).

3. The multifunctional peripheral device (1) as claimed in claim 1, wherein the setting data storage unit (3) is provided in a main body (5) of the image forming device (1).

4. The multifunctional peripheral device (1) as claimed in claim 1, wherein the setting data storage unit (7) is provided in a server device (10) located on a network.

5. The multifunctional peripheral device (1) as claimed in claim 1, further comprising:
a user authentication determination unit (8) configured to determine whether the operation screen setting results are within an allowed range specified for said user, before storing the operation screen setting results obtained by the screen generation unit (6) in the setting data storage unit (7),
wherein the operation screen setting results are stored in the setting data storage unit (6) when the operation screen setting results are within the allowed range of said user.

6. The multifunctional peripheral device (1) as claimed in claim 1, further comprising:
a function storage unit (9) configured to store a summary of functions available in the image forming device (1),
wherein the screen generation unit (6) is configured to acquire functions available to said user from the function storage unit (9) before generating the setting screen, and generate the setting screen based on the acquired functions available to said user.

7. The multifunctional peripheral device (1) as claimed in claim 1, wherein the display unit (3) is configured to display the setting screen together with the operation screen.

8. The multifunctional peripheral device (1) as claimed in claim 1, wherein the screen generation unit (6) is configured to update the operation screen in real-time to maintain the operation screen to be the same as the setting screen.

9. A method of customizing a user interface of a multifunctional peripheral device (1) including an operational unit (2), said operational unit (2) having a display unit (3) for displaying an operation screen for operating the multifunctional peripheral device (1), said method comprising:
storing a plurality of operation screen setting data sets, wherein each operation screen setting data set corresponds to one of a plurality of users of the multifunctional peripheral device in said setting data storage unit (7);
acquiring, in response to a request from a user for setting the operation screen, one of the operation screen setting data sets corresponding to said user from a setting data storage unit (7);
generating a setting screen;
displaying the setting screen on the display unit (3) for performing operation screen setting; and
storing results of the operation screen setting in the setting data storage unit (7); **characterized by**:
displaying a list of the operation screens corresponding to respective users registered in the setting data storage unit (7);
displaying an operation screen, selected by the user from the list, on the display unit (3); and
storing, in response to a request from the user, a setting data set of the operation screen selected by the user in the setting data storage unit (7) as a setting data set corresponding to said user.

10. The method as claimed in claim 9, further comprises the following step:
providing the setting data storage unit (7) in a main body (5) of the multifunctional peripheral device (1), or in a server device (10) located on a network.

## Patentansprüche

1. Mehrzweckperipherievorrichtung (1), die aufweist:
eine Betriebseinheit (2) mit einer Anzeigeeinheit (3), die konfiguriert ist, um einen Betriebsbildschirm zum Betrieb der Mehrzweckperipherievorrichtung (1) anzuzeigen;
eine Einstelldatenspeichereinheit (7), die konfiguriert ist, um eine Vielzahl von Betriebsbildschirmeinstelldatensätze zu speichern, wobei jeder Betriebsbildschirmeinstelldatensatz zu einem von einer Vielzahl von Nutzern der Mehrzweckperipherievorrichtung korrespondiert; und
eine Bildschirmerzeugungseinheit (6), die konfiguriert ist, um in Antwort auf eine Anfrage zum Einstellen des Betriebsbildschirms von einem Nutzer, einen der Betriebsbildschirmeinstelldatensätze, der zu dem Nutzer korrespondiert, von der Einstelldatenspeichereinheit (7) zu erfassen, einen Einstellbildschirm zu erzeugen, den Einstellbildschirm auf der Anzeigeeinheit (3) anzuzeigen, um eine Betriebsbildschirmeinstellung durchzuführen, und um Ergebnisse von der Betriebsbildschirmeinstellung in der Einstelldatenspeichereinheit (7) zu speichern;
**dadurch gekennzeichnet, dass**:
die Anzeigeeinheit (3) konfiguriert ist, um eine Liste von Betriebsbildschirmen, die zu den jeweiligen Nutzern korrespondieren, die in der Einstelldatenspeichereinheit (7) registriert sind, anzuzeigen;
die Bildschirmerzeugungseinheit (6) konfiguriert ist, um einen Betriebsbildschirm anzuzeigen, der durch den Nutzer von der Liste ausgewählt wurde, und zwar auf der Anzeigeeinheit (3); und
die Bildschirmerzeugungseinheit (6) weiter konfiguriert ist, um in Antwort auf eine Anfrage von dem Nutzer einen Einstelldatensatz von dem Betriebsbildschirm zu speichern, der durch den Nutzer in der Einstelldatenspeichereinheit (7) als ein Einstelldatensatz ausgewählt wurde, der zu dem Nutzer korrespondiert.

2. Mehrzweckperipherievorrichtung (1) nach Anspruch 1, wobei die Einstelldatenspeichereinheit (7) in einer gemeinsamen Speichervorrichtung separat von der Betriebseinheit (2) bereitgestellt ist

3. Mehrzweckperipherievorrichtung (1) nach Anspruch 1, wobei die Einstelldatenspeichereinheit (3) in einem Hauptkörper bzw. Hauptteil (5) der Mehrzweckperipherievorrichtung (1) bereitgestellt ist.

4. Mehrzweckperipherievorrichtung (1) nach Anspruch 1, wobei die Einstelldatenspeichereinheit (7) in einer Servervorrichtung (10), die an einem Netzwerk angeordnet ist, bereitgestellt ist.

5. Mehrzweckperipherievorrichtung (1) nach Anspruch 1, weiter aufweisend:
eine Nutzerauthentifizierungsbestimmungseinheit (8), die konfiguriert ist, um zu bestimmen, ob die Betriebsbildschirmeinstellergebnisse innerhalb eines gewährbaren Bereichs sind, der für den Nutzer spezifiziert ist, und zwar bevor die Betriebsbildschirmeinstellergebnisse, die durch die Bildschirmerzeugungseinheit (6) erhalten wurden in der Einstelldatenspeichereinheit (7) gespeichert werden,
wobei die Betriebsbildschirmeinstellergebnisse in der Einstelldatenspeichereinheit (6) gespeichert werden, wenn die Betriebsbildschirmeinstellergebnisse innerhalb des gewährbaren Bereichs des Nutzers sind.

6. Mehrzweckperipherievorrichtung (1) nach Anspruch 1, weiter aufweisend:
eine Funktionsspeichereinheit (9), die konfiguriert ist, um eine Zusammenfassung bzw. Inhaltsangabe oder Übersicht von Funktionen zu speichern, die in der Mehrzweckperipherievorrichtung (1) zur Verfügung stehen,
wobei die Bildschirmerzeugungseinheit (6) konfiguriert ist, um Funktionen zu erfassen, die dem Nutzer zur Verfügung stehen, und zwar von der Funktionsspeichereinheit (9), und zwar bevor der Einstellbildschirm erzeugt wird, und der Einstellbildschirm basierend auf den erfassten Funktionen, die dem Nutzer zur Verfügung stehen, erzeugt wird.

7. Mehrzweckperipherievorrichtung (1) nach Anspruch 1, wobei die Anzeigeeinheit (3) konfiguriert ist, um den Einstellbildschirm zusammen mit dem Betriebsbildschirm anzuzeigen.

8. Mehrzweckperipherievorrichtung (1) nach Anspruch 1, wobei die Bildschirmerzeugungseinheit (6) konfiguriert ist, um den Betriebsbildschirm in Echtzeit zu aktualisieren, um den Betriebsbildschirm aufrecht zu erhalten, um der selbe zu sein wie der Einstellbildschirm.

9. Verfahren eines kundenspezifischen Anpassens eines Nutzerinterfaces von einer Mehrzweckperipherievorrichtung (1), die eine Betriebseinheit (2) einschließt, wobei die Betriebseinheit (2) eine Anzeigeeinheit (3) zum Anzeigen eines Betriebsbildschirms zum Betrieb der Mehrzweckperipherievorrichtung (1) aufweist, wobei das Verfahren aufweist:
Speichern einer Vielzahl von Betriebsbildschirmeinstelldatensätzen, wobei jeder Betriebsbildschirmeinstelldatensatz zu einem von einer Vielzahl von Nutzern der Mehrzweckperipherievorrichtung in der Einstelldatenspeichereinheit (7) korrespondiert,
Erfassen, in Antwort auf eine Anfrage von einem Nutzer zum Einstellen des Betriebsbildschirms, und zwar einen von den Betriebsbildschirmeinstelldatensätzen, die zu dem Nutzer korrespondieren, und zwar von einer Einstelldatenspeichereinheit (7);
Erzeugen eines Einstellbildschirms;
Anzeigen des Einstellbildschirms auf der Anzeigeeinheit (3), um das Betriebsbildschirmeinstellen durchzuführen; und
Speichern von Ergebnissen des Betriebsbildschirmeinstellens in der Einstelldatenspeichereinheit (7);
**gekennzeichnet durch**:
Anzeigen einer Liste der Betriebsbildschirme, die zu den jeweiligen Nutzern, die in der Einstelldatenspeichereinheit (7) registriert sind, korrespondieren;
Anzeigen eines Betriebsbildschirms, der **durch** den Nutzer von der Liste ausgewählt wurde, und zwar auf der Anzeigeeinheit (3); und
Speichern, in Antwort auf eine Anfrage von dem Nutzer, eines Einstelldatensatzes des Betriebsbildschirms, der **durch** den Nutzer in der Einstelldatenspeichereinheit (7) als ein Einstelldatensatz gewählt wurde, der zu dem Nutzer korrespondiert.

10. Verfahren nach Anspruch 9, weiter aufweisend den folgenden Schritt:
Bereitstellung der Einstelldatenspeichereinheit (7) in dem Hauptkörper bzw. Hauptteil (5) der Mehrzweckperipherievorrichtung (1), oder in einer Servervorrichtung (10), die an einem Netzwerk angeordnet ist.

## Revendications

1. Dispositif périphérique multifonctionnel (1), comprenant :
une unité fonctionnelle (2) comportant une unité d'affichage (3) configurée pour afficher un écran d'opération pour commander le dispositif périphérique multifonctionnel (1) ;
une unité de mémorisation de données de configuration (7) configurée pour mémoriser une pluralité d'ensembles de données de configuration d'écran d'opération, dans lequel chaque ensemble de données de configuration d'écran d'opération correspond à l'un d'une pluralité d'utilisateurs du dispositif périphérique multifonctionnel ; et
une unité de génération d'écran (6) configurée pour acquérir, en réponse à une demande de configuration de l'écran d'opération d'un utilisateur, l'un des ensembles de données de configuration d'écran d'opération correspondant au dit utilisateur de l'unité de mémorisation de données de configuration (7), générer un écran de configuration, afficher l'écran de configuration sur l'unité d'affichage (3) pour effectuer la configuration de l'écran d'opération, et mémoriser les résultats de la configuration de l'écran d'opération dans l'unité de mémorisation de données de configuration (7) ;
**caractérisé en ce que** :
l'unité d'affichage (3) est configurée pour afficher une liste des écrans d'opération correspondant aux utilisateurs respectifs enregistrés dans l'unité de mémorisation de données de configuration (7) ;
l'unité de génération d'écran (6) est configurée pour afficher un écran d'opération, sélectionné par l'utilisateur dans la liste, sur l'unité d'affichage (3) ; et
l'unité de génération d'écran (6) est en outre configurée pour mémoriser, en réponse à une demande de l'utilisateur, un ensemble de données de configuration de l'écran d'opération sélectionné par l'utilisateur dans l'unité de mémorisation de données de configuration (7) en tant qu'ensemble de données de configuration correspondant au dit utilisateur.

2. Dispositif périphérique multifonctionnel (1) selon la revendication 1, dans lequel l'unité de mémorisation de données de configuration (7) est prévue dans un dispositif de mémorisation commun distinct de l'unité fonctionnelle (2).

3. Dispositif périphérique multifonctionnel (1) selon la revendication 1, dans lequel l'unité de mémorisation de données de configuration (3) est prévue dans un corps principal (5) du dispositif périphérique multifonctionnel (1).

4. Dispositif périphérique multifonctionnel (1) selon la revendication 1, dans lequel l'unité de mémorisation de données de configuration (7) est prévue dans un dispositif serveur (10) situé sur un réseau.

5. Dispositif périphérique multifonctionnel (1) selon la revendication 1, comprenant en outre :
une unité de détermination d'authentification d'utilisateur (8) configurée pour déterminer si les résultats de configuration d'écran d'opération sont dans une plage autorisée spécifiée pour ledit utilisateur, avant de mémoriser les résultats de configuration d'écran d'opération obtenus par l'unité de génération d'écran (6) dans l'unité de mémorisation de données de configuration (7),
dans lequel les résultats de configuration d'écran d'opération sont mémorisés dans l'unité de mémorisation de données de configuration (6) lorsque les résultats de configuration d'écran d'opération sont dans la plage autorisée dudit utilisateur.

6. Dispositif périphérique multifonctionnel (1) selon la revendication 1, comprenant en outre :
une unité de mémorisation de fonction (9) configurée pour mémoriser un résumé des fonctions disponibles dans le dispositif périphérique multifonctionnel (1),
dans lequel l'unité de génération d'écran (6) est configurée pour acquérir des fonctions disponibles pour ledit utilisateur auprès de l'unité de mémorisation de fonction (9) avant de générer l'écran de configuration, et générer l'écran de configuration sur la base des fonctions acquises disponibles pour ledit utilisateur.

7. Dispositif périphérique multifonctionnel (1) selon la revendication 1, dans lequel l'unité d'affichage (3) est configurée pour afficher l'écran de configuration avec l'écran d'opération.

8. Dispositif périphérique multifonctionnel (1) selon la revendication 1, dans lequel l'unité de génération d'écran (6) est configurée pour mettre à jour l'écran d'opération en temps réel pour maintenir l'écran d'opération pour qu'il soit identique à l'écran de configuration.

9. Procédé de personnalisation d'une interface utilisateur d'un dispositif périphérique multifonctionnel (1) comprenant une unité fonctionnelle (2), ladite unité fonctionnelle (2) comportant une unité d'affichage (3) pour afficher un écran d'opération pour commander le dispositif périphérique multifonctionnel (1), ledit procédé consistant à :
mémoriser une pluralité d'ensembles de données de configuration d'écran d'opération, dans lequel chaque ensemble de données de configuration d'écran d'opération correspond à l'un d'une pluralité d'utilisateurs du dispositif périphérique multifonctionnel dans ladite unité de mémorisation de données de configuration (7) ;
acquérir, en réponse à une demande d'un utilisateur pour configurer l'écran d'opération, l'un des ensembles de données de configuration d'écran d'opération correspondant au dit utilisateur auprès d'une unité de mémorisation de données de configuration (7) ;
générer un écran de configuration ;
afficher l'écran de configuration sur l'unité d'affichage (3) pour effectuer une configuration d'écran d'opération ; et
mémoriser les résultats de la configuration d'écran d'opération dans l'unité de mémorisation de données de configuration (7) ;
**caractérisé par** les étapes consistant à :
afficher une liste des écrans d'opération correspondant aux utilisateurs respectifs enregistrés dans l'unité de mémorisation de données de configuration (7) ;
afficher un écran d'opération, sélectionné par l'utilisateur dans la liste, sur l'unité d'affichage (3) ; et
mémoriser, en réponse à une demande de l'utilisateur, un ensemble de données de configuration de l'écran d'opération sélectionné par l'utilisateur dans l'unité de mémorisation de données de configuration (7) en tant qu'ensemble de données de configuration correspondant au dit utilisateur.

10. Procédé selon la revendication 9, comprenant en outre l'étape suivante consistant à :
prévoir l'unité de mémorisation de données de configuration (7) dans un corps principal (5) du dispositif périphérique multifonctionnel (1), ou dans un dispositif serveur (10) situé sur un réseau.
